# EUROPÄISCHE PATENTSCHRIFT

(11) **EP 3 129 691 B1**
(45) Veröffentlichungstag und Bekanntmachung des Hinweises auf die Patenterteilung: **05.09.2018**
(21) Anmeldenummer: 16703927.0
(22) Anmeldetag: 21.01.2016
(51) Int. Cl.: F16L 19/028, B21D 19/04, B23K 26/362, B60T 17/04, F02M 55/00

(54) **VERFAHREN ZUM HERSTELLEN EINER ROHRLEITUNG, INSBESONDERE EINER BREMSROHRLEITUNG ODER KRAFTSTOFFROHRLEITUNG FÜR EIN KRAFTFAHRZEUG, SOWIE EINE SOLCHE ROHRLEITUNG**
METHOD FOR PRODUCING A PIPELINE, IN PARTICULAR A BRAKE PIPELINE OR FUEL PIPELINE FOR A MOTOR VEHICLE, AND SUCH A PIPELINE
PROCÉDÉ DE FABRICATION D'UN CONDUIT TUBULAIRE, NOTAMMENT D'UN CONDUIT TUBULAIRE DE FREIN OU D'UN CONDUIT TUBULAIRE DE CARBURANT POUR VÉHICULE AUTOMOBILE, ET CONDUIT TUBULAIRE

(30) Priorität: 23.01.2015 EP 15152400; 16.04.2015 DE 102015105798
(43) Veröffentlichungstag der Anmeldung: 15.02.2017
(73) Patentinhaber: Cooper-Standard Automotive (Deutschland) GmbH, 89601 Schelklingen (DE)
(72) Erfinder: HAMMER, Ole, 67166 Otterstadt (DE); SCHIMEK, Lothar, 89264 Weißenhorn (DE)
(74) Vertreter: Flügel Preissner Schober Seidel
(86) Internationale Anmeldenummer: PCT/EP2016/051230
(87) Internationale Veröffentlichungsnummer: WO 2016/116558

(56) Entgegenhaltungen:
- EP-A1- 1 624 183
- WO-A1-98/39137
- DE-B3-102013 011 213
- US-A1- 2010 126 972

## Beschreibung

Die vorliegende Erfindung betrifft ein Verfahren zum Herstellen einer mit einem Bördel versehenen Rohrleitung, insbesondere einer Bremsrohrleitung oder Kraftstoffrohrleitung für ein Kraftfahrzeug. Die Erfindung bezieht sich ferner auf eine solche Rohrleitung.

Bremsrohrleitungen, auch Bremsleitungen genannt, oder Kraftstoffrohrleitungen, auch Kraftstoffleitungen genannt, die in Kraftfahrzeugen Anwendung finden und starr oder biegsam ausgestaltet sein können, verfügen in der Regel über einen aus mehreren Schichten bestehenden Aufbau. Ein Innenrohr, das meist aus Aluminium oder Stahl besteht, ist von einer Korrosionsschutzschicht umgeben, die zum Schutz vor äußeren Einflüssen mit einer Deckschicht, die im Allgemeinen aus Kunststoff besteht oder als Lackschicht ausgebildet ist, ummantelt ist.

Zum Anschluss einer derartigen Rohrleitung, beispielweise an ein Aggregat des Bremssystems eines Kraftfahrzeugs, etwa einen Bremszylinder oder einen Bremskraftverstärker, werden sogenannte Rohrschrauben oder Überwurfschrauben verwendet, die einen Durchgang zur Aufnahme der Rohrleitung und ein Außengewinde zum Einschrauben in eine mit einem Innengewinde versehene Öffnung des Aggregats aufweisen. Die Rohrleitung wird derart in den Durchgang eingesetzt, dass ein am Ende der Rohrleitung angeordneter Bördel beim Einschrauben der Rohrschraube in die Öffnung des Aggregats dichtend gegen eine sich am Grund der Öffnung befindende Anschlussfläche gedrückt und damit zwischen der Anschlussfläche und einer Kontaktfläche der Rohrschraube in der Öffnung gehalten wird. Die Ausgestaltung des Bördels ist üblicherweise genormt, beispielsweise entsprechend der Norm DIN 74 234:1992-09 betreffend hydraulische Bremsanlagen; Bremsrohre, Bördel. Rohrschrauben zum Befestigen von Rohrleitungen werden zum Beispiel in DE 10 2012 108 433 B3, DE 42 36 323 A1, EP 2 136 119 A1, DE 20 2014 102 663 U1 und EP 1 624 183 A1 beschrieben.

Die aus DE 10 2012 108 433 B3 bekannte Rohrschraube zeichnet sich dadurch aus, dass auf die Kontaktfläche zwei Lagen einer reibungsvermindernden Schicht, bei der es sich um einen auf Polyethylen basierenden Trockengleitfilm handelt, aufgetragen ist. Die Rohrschraube erzeugt auf diese Weise im Bereich der Kontaktfläche einen vergleichsweise geringen Reibwert, der sicherstellt, dass beim Kontaktieren des Bördels der Rohrleitung und der damit auftretenden Reibung eine Torsion der Rohrleitung unterbleibt. Denn eine auftretende Torsion führte zu einer unerwünschten Torsionsspannung in der Rohrleitung, welche die Gefahr eines Lockerns der Rohrschraube hervorruft. Ein geringer Reibwert im Bereich der Kontaktfläche wird bei der aus DE 20 2014 102 663 U1 bekannten Rohrschraube ebenfalls durch eine zweifache Beschichtung erzeugt.

Der Bördel der Rohrleitung wird durch Umformen hergestellt. Die in axialer Richtung der Rohrleitung vordere Fläche des Bördels fungiert als Dichtfläche und muss demnach möglichst glatt und frei von Rissen und Riefen sein. Daher ist es erforderlich, die Deckschicht in einem Endabschnitt der Rohrleitung vor dem Umformen zu entfernen. Dieses Entschichten erfolgt in der Regel entweder mittels einer mechanischen Bearbeitung, bei der durch ein Schälwerkzeug, wie es beispielsweise aus DE 202 14 265 U1 und US 2010/0126972 A1 bekannt ist, oder durch ein eine wechselnde Druckbeaufschlagung erzeugendes Rollenwerkzeug, wie es aus DE 10 2013 011 213 B3 bekannt ist, die Deckschicht im Bereich des Endabschnitts abgelöst wird, oder mittels einer Laserbearbeitung, wie es aus DE 295 10 705 U1 bekannt ist, bei der die Deckschicht mittels eines Laserstrahls entfernt wird.

Sowohl bei der mechanischen Bearbeitung mittels Schälwerkzeugen als auch bei der Laserbearbeitung ist es das Ziel der bekannten Verfahren, die Deckschicht möglichst rückstandsfrei und ohne Beschädigung der darunterliegenden Korrosionsschutzschicht zu entfernen. Vor allem das rückstandsfreie Entschichten wird als unerlässlich angesehen, da im Endabschnitt verbleibende Partikel der Beschichtung bei einem Ablösen eine erhebliche Gefahr für die Funktionssicherheit eines Bremssystems darstellen können, wie in DE 10 2013 011 213 B3 und DE 295 10 705 U1 hervorgehoben wird.

Außerdem ist aus WO 98/39137 A1 ein Verfahren zum Herstellen einer mit einem Bördel versehenen Bremsleitung bekannt, bei dem mittels Laserbearbeitung eine auf der Bremsleitung vorhandene Schutzschicht vor Bildung des Bördels abgetragen wird. Das Verfahren sieht einen schräg verlaufenden Übergangsabschnitt vor, der sich ein Stück weit in den Bereich des Bördels erstreckt. Der Übergangsbereich dient dazu, eine scharfe Kante beim Übergang von der Schutzschicht auf den entschichteten Bereich zu vermeiden.

Der Erfindung liegt die **Aufgabe** zugrunde, ein Verfahren zum Herstellen einer Rohrleitung zu schaffen, durch das sich eine mit einem Bördel versehene Rohrleitung erzeugen lässt, die im eingebauten Zustand einem unbeabsichtigten Loslösen einer Rohrschraube entgegenwirkt.

Diese Aufgabe wird durch ein Verfahren gemäß Anspruch 1 und eine Rohrleitung gemäß Anspruch 8 **gelöst.** Bevorzugte Ausgestaltungen der Erfindung werden in den Ansprüchen 2 bis 7 und 9 bis 11 definiert.

Das erfindungsgemäße Verfahren zum Herstellen einer mit einem Bördel versehenen Rohrleitung, bei der es sich insbesondere um eine Bremsrohrleitung oder eine Kraftstoffrohrleitung für ein Kraftfahrzeug handelt, umfasst die folgenden Verfahrensschritte:
Bereitstellen einer Rohrleitung, die ein sich in einer axialen Richtung erstreckendes Innenrohr, auch Rohrkern genannt, eine das Innenrohr ummantelnde Beschichtung und einen an einer Stirnfläche endenden Endabschnitt umfasst;
Entschichten des Endabschnitts entlang eines ersten Entschichtungsabschnitts auf eine erste Schichtdicke derart, dass sich mit der Oberfläche des Endabschnitts im Bereich des ersten Entschichtungsabschnitts ein erster Reibwert erzeugen lässt;
Entschichten des Endabschnitts entlang wenigstens eines zweiten Entschichtungsabschnitts auf eine konstante zweite Schichtdicke, die größer als die erste Schichtdicke ist, derart, dass sich mit der Oberfläche des Endabschnitts im Bereich des zweiten Entschichtungsabschnitts ein zweiter Reibwert, der geringer als der erste Reibwert ist, erzeugen lässt;
Umformen, insbesondere Bördeln, des Endabschnitts zum Bilden eines Bördels, der eine stirnseitige Dichtfläche und eine der Dichtfläche abgewandte Anlagefläche aufweist, derart, dass der erste Entschichtungsabschnitt die Dichtfläche und der zweite Entschichtungsabschnitt die Anlagefläche bildet, wobei der Übergang von dem ersten Entschichtungsabschnitt auf den zweiten Entschichtungsabschnitt sich im Bereich des größten Außendurchmessers des Bördels befindet.

Die erfindungsgemäße Rohrleitung findet insbesondere als Bremsrohrleitung oder Kraftstoffrohrleitung für ein Kraftfahrzeug Anwendung und umfasst ein sich in einer axialen Richtung erstreckendes Innenrohr, eine das Innenrohr ummantelnde Beschichtung und einen an einer Stirnfläche endenden Endabschnitt. Der Endabschnitt umfasst einen Bördel, der eine stirnseitige Dichtfläche und eine der Dichtfläche abwandte Anlagefläche aufweist. Die Beschichtung ist im Bereich des Endabschnitts selektiv derart abgetragen, dass die Oberfläche des Endabschnitts an der Dichtfläche einen ersten Reibwert und an der Anlagefläche einen zweiten Reibwert, der geringer als der erste Reibwert ist, hervorruft. Die Beschichtung ist im Bereich des ersten Entschichtungsabschnitts auf eine erste Schichtdicke und im Bereich des zweiten Entschichtungsabschnitts auf eine konstante zweite Schichtdicke, die größer als die erste Schichtdicke ist, reduziert. Der Übergang von dem ersten Entschichtungsabschnitt auf den zweiten Entschichtungsabschnitt befindet sich im Bereich des größten Außendurchmessers des Bördels.

Die Erfindung beruht auf der Erkenntnis, durch ein stufenweises Entschichten des Endabschnitts einen vergleichsweise hohen Reibwert im Bereich des ersten Entschichtungsabschnitts und einen vergleichsweise geringen Reibwert im Bereich des zweiten Entschichtungsabschnitts zu erzeugen. Der Reibwert, auch Reibungszahl genannt, ist eine dimensionslose Zahl, die aus gemessenen physikalischen Eigenschaften berechnet wird und von der Art und der Geometrie der in Kontakt stehenden Oberflächen abhängt. Versuchsaufbauten und Versuchsabläufe zur Ermittlung der Reibwerte beziehungsweise Reibungszahlen beschreiben insbesondere der VDA-Standard 235-203 und die Norm DIN EN ISO 16047:2005.

Nach dem Umformen des Endabschnitts zum Bilden eines auch als Bördelflansch bezeichneten Bördels, beispielsweise durch Bördelung mittels eines gängigen Bördelwerkzeugs, bildet der erste Entschichtungsabschnitt die in axialer Richtung vordere Dichtfläche des Bördels und der zweite Entschichtungsabschnitt die der Dichtfläche abgewandte Anlagefläche des Bördels, an der im eingebauten Zustand die Kontaktfläche der Rohrschraube anliegt. Der geringere Reibwert im Bereich der Anlagefläche stellt sicher, dass beim Einschrauben der Rohrschraube eine vergleichsweise geringere Reibung zwischen Kontaktfläche der Rohrschraube und Anlagefläche des Bördels auftritt und damit eine Torsion der Rohrleitung, die eine unerwünschte Torsionsspannung hervorriefe, vermieden wird. Der im Vergleich zu dem zweiten Reibwert höhere Reibwert im Bereich der Dichtfläche hingegen gewährleistet ein reibschlüssiges Anliegen des Bördels an beispielsweise einem Aggregat des Bremssystems eines Kraftfahrzeugs und trägt damit nicht nur zu einer eine Torsion der Rohrleitung vermeidenden Montage, sondern auch zu einer fluiddichten Verbindung bei.

In Abkehr von dem bislang Üblichen macht sich die Erfindung die Erkenntnis zu Eigen, dass es nicht erforderlich ist, die Deckschicht, das heißt die Beschichtung, der Rohrleitung im gesamten Endabschnitt rückstandsfrei zu entfernen. Vielmehr hat es sich nicht nur als praktikabel, sondern als besonders vorteilhaft erwiesen, durch ein selektives Abtragen der Beschichtung zumindest im Bereich des zweiten Entschichtungsabschnitts einen Rest verbleiben zu lassen, durch den sich ein vergleichsweise geringer Reibwert erzielen lässt. Die Erfindung ermöglicht demnach, neue Wege zu beschreiten, da es die funktionsgerechte Ausgestaltung des Bördels beispielsweise erlaubt, herkömmliche Rohrschrauben, die nicht aufwändig beschichtet und infolgedessen kostengünstig herzustellen sind, zu verwenden.

In einer bevorzugten Ausgestaltung der Erfindung erstreckt sich der erste Entschichtungsabschnitt in der axialen Richtung von einem ersten Anfangspunkt bis zu einem ersten Endpunkt. Der zweite Entschichtungsabschnitt erstreckt sich bevorzugt in der axialen Richtung von einem zweiten Anfangspunkt bis zu einem zweiten Endpunkt. Der erste Anfangspunkt befindet sich vorzugsweise an der Stirnfläche, wohingegen vorzugsweise der erste Endpunkt und der zweite Anfangspunkt zusammenfallen. In letzterem Fall erstreckt sich der erste Entschichtungsabschnitt von der Stirnfläche der Rohrleitung bis zu dem zweiten Entschichtungsabschnitt. Der Übergang von dem ersten Entschichtungsabschnitt auf den zweiten Entschichtungsabschnitt befindet sich erfindungsgemäß im Bereich des größten Außendurchmessers des Bördels. Der erste Entschichtungsabschnitt und der zweite Entschichtungsabschnitt müssen jedoch nicht aneinandergrenzen, sondern könnten, etwa in Abhängigkeit von der Ausgestaltung des Bördels, beispielsweise in axialer Richtung in einem Abstand zueinander angeordnet sein, so dass sich mehr als zwei Entschichtungsabschnitte ergeben. Maßgeblich ist allein, dass sich durch das selektive Abtragen der Beschichtung verschieden große Reibwerte in dem Endabschnitt erzeugen lassen, die den unterschiedlichen Anforderungen, die in funktionaler Hinsicht insbesondere an die Dichtfläche und an die Anlagefläche des Bördels gestellt werden, gerecht werden.

Zweckmäßigerweise wird der Endabschnitt an der Stirnfläche vor dem Umformen mit einer Fase versehen. Bei einem zu formenden Bördel der Form F gemäß der Norm DIN 74 234:1992-09 wird die Außenkante der Rohrleitung abgeschrägt.

In einer bevorzugten Ausgestaltung der Erfindung besteht das Innenrohr aus Metall, insbesondere Stahl oder einer Kupfer-Nickel-Legierung. Vorzugsweise ist auf das Innenrohr eine Korrosionsschutzschicht, insbesondere auf Basis von Zink oder Aluminium, aufgetragen, um eine hohe Korrosionsbeständigkeit sicherzustellen.

Vorteilhafterweise besteht die Beschichtung aus Kunststoff, insbesondere Polyamid. Vorzugsweise hat die Beschichtung eine Gesamtschichtdicke, die zwischen ca. 0,05 mm und ca. 0,4 mm, insbesondere zwischen ca. 0,1 mm und ca. 0,3 mm, beträgt.

In einer bevorzugten Ausgestaltung der Erfindung wird zum Entschichten des Endabschnitts die Beschichtung mittels eines Laserstrahls selektiv abgetragen. Die Verwendung eines Laserstrahls ermöglicht das Entfernen der Beschichtung mit einer hohen Präzision und Bearbeitungsgeschwindigkeit. Alternativ oder in Kombination mit der Laserbearbeitung kann die Beschichtung auch durch eine mechanische Bearbeitung entfernt werden.

Vorzugsweise wird die Beschichtung im Bereich des ersten Entschichtungsabschnitts vollständig entfernt. Eine vollständige Entfernung der Beschichtung im Bereich des ersten Entschichtungsabschnitts trägt den Anforderungen an die durch den ersten Entschichtungsabschnitt gebildete Dichtfläche Rechnung. Insbesondere die Gefahr des Ablösens von beispielsweise die Funktionssicherheit eines Bremssystems beeinträchtigenden Partikeln wird somit vermieden. Demgegenüber ist die Reduzierung der Beschichtung im Bereich des zweiten Entschichtungsabschnitts auf die zweite Schichtdicke für die Funktionssicherheit eines Bremssystems unschädlich, da sich die durch den zweiten Entschichtungsabschnitt gebildete Anlagefläche auf der Seite des Bördels befindet, die der Dichtfläche abgewandt ist, so dass es auszuschließen ist, dass Partikel der Beschichtung in das Innere der Rohrleitung gelangen können.

Zweckmäßigerweise ist der im Bereich des ersten Entschichtungsabschnitts erzeugte Reibwert größer als der im Bereich des zweiten Entschichtungsabschnitts erzeugte Reibwert, um insbesondere den Anforderungen der Praxis, wie sie beispielsweise in dem VDA-Standard 235-203 angegeben sind, zu genügen.

Einzelheiten und weitere Vorteile der Erfindung ergeben sich aus der nachfolgenden Beschreibung bevorzugter Ausführungsbeispiele. In den die Ausführungsbeispiele schematisch veranschaulichenden Zeichnungen zeigen im Einzelnen:
- Fig. 1a: einen Längsschnitt durch eine an ein Anschlusselement angeschlossene Rohrleitung mit einem Bördel der Form F;
- Fig. 1b: einen Längsschnitt entsprechend Fig. 1a mit einem Bördel der Form E;
- Fig. 1c: einen Längsschnitt durch eine E-F-Verbindung;
- Fig. 1d: einen Längsschnitt durch eine F-F-Verbindung;
- Fig. 2a: einen Längsschnitt durch eine Rohrleitung vor dem Entschichten eines Endabschnitts;
- Fig. 2b: einen Längsschnitt durch die Rohrleitung gemäß Fig. 2a nach dem Entschichten des Endabschnitts;
- Fig. 2c: einen Längsschnitt durch die Rohrleitung gemäß Fig. 2b nach dem Vorsehen einer Fase an einer Stirnseite des Endabschnitts;
- Fig. 2d: einen Längsschnitt durch die Rohrleitung gemäß Fig. 2c nach dem Umformen des Endabschnitts zu einem Bördel der Form F;
- Fig. 2e: einen Längsschnitt durch eine Rohrleitung gemäß Fig. 2b nach dem Umformen des Endabschnitts zu einem Bördel der Form E und
- Fig. 3: eine vergrößerte Darstellung des Längsschnitts gemäß Fig. 2b.

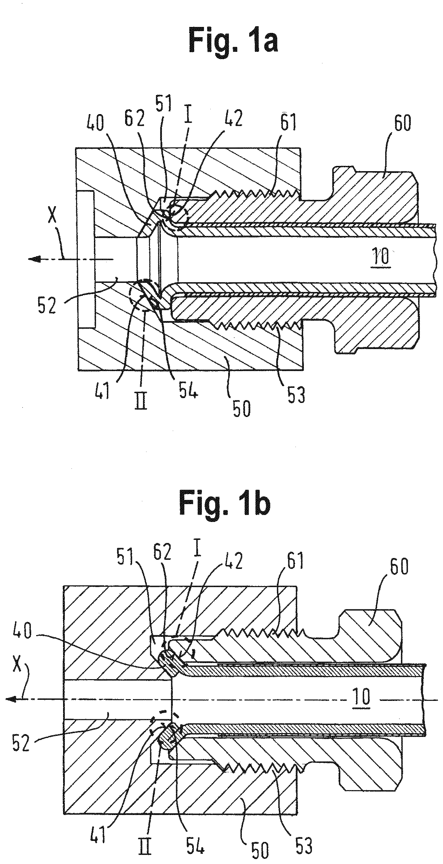

Die in Fig. 1a dargestellte Ausführungsform weist eine Rohrleitung 10 auf, die mittels einer Rohrschraube 60 an einem Anschlusselement 50, bei dem es sich zum Beispiel um ein Aggregat des Bremssystems eines Kraftfahrzeugs handelt, befestigt ist. Das Anschlusselement 50 weist eine Öffnung 51 auf, die in eine Leitung 52 mündet. Die Öffnung 51 weist ein Innengewinde 53 und eine sich am Grund der Öffnung 51 befindende Anschlussfläche 54 auf, welche die Leitung 52 umrandet und im vorliegenden Fall konkav ausgestaltet ist. Die Rohrschraube 60 weist ein Außengewinde 61 auf, das in das Innengewinde 53 des Anschlusselements 50 eingeschraubt ist. Die Rohrschraube 60 weist ferner eine Kontaktfläche 62 auf, die sich in axialer Richtung x vorne befindet.

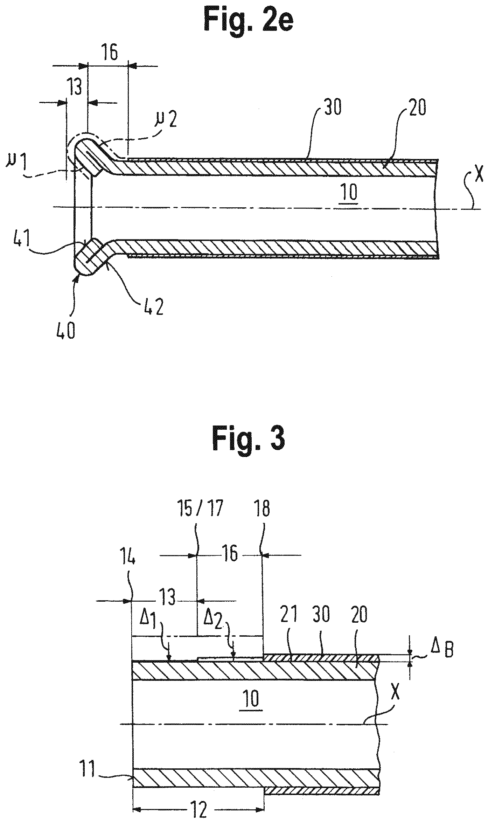

Die als Bremsrohrleitung dienende Rohrleitung 10 weist ein aus Stahl oder einer Kupfer-Nickel-Legierung bestehendes Innenrohr 20 auf, auf das eine Korrosionsschutzschicht 21 aufgetragen ist, wie insbesondere Fig. 3 zu erkennen gibt. Die eine hohe Korrosionsbeständigkeit bei vergleichsweise hohen Temperaturen sicherstellende Korrosionsschutzschicht 21 ist beispielsweise eine Zinkschicht oder eine Aluminium-Zink-Legierung. Wie Fig. 3 ferner zu erkennen gibt, befindet sich auf der Korrosionsschutzschicht 21 eine das Innenrohr 20 ummantelnde Beschichtung 30, die aus Kunststoff, insbesondere Polyamid, besteht. Die Beschichtung 30 hat eine Gesamtschichtdicke Δ_{B}, die zwischen ca. 0,05 mm und ca. 0,1 mm, insbesondere zwischen ca. 0,1 mm und ca. 0,3 mm, beträgt.

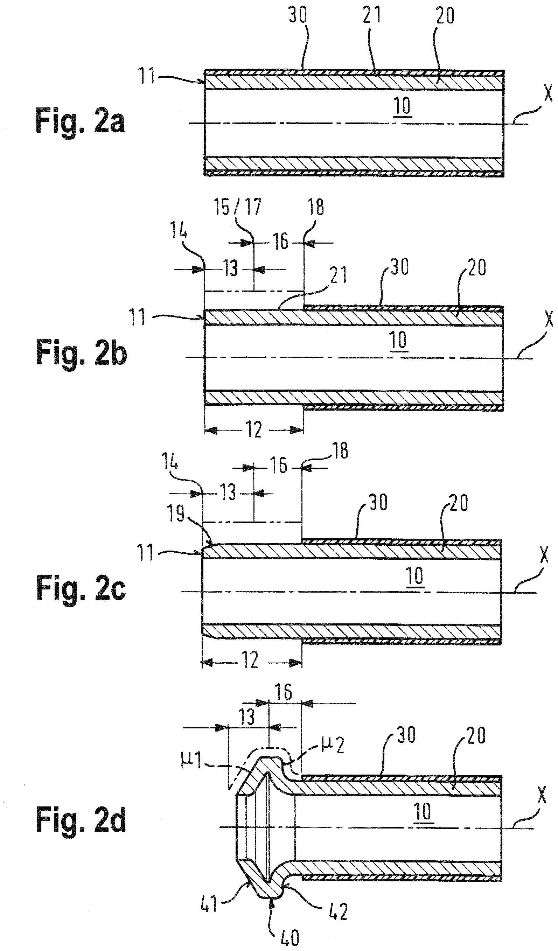

Die Rohrleitung 10 weist, wie Fig. 3 zu erkennen gibt, einen in der axialen Richtung x an einer Stirnfläche 11 mündenden Endabschnitt 12 auf. Der Endabschnitt 12 ist zu einem Bördel 40 geformt, der eine in axialer Richtung x vordere Dichtfläche 41 und eine der Dichtfläche 41 abgewandte Anlagefläche 42 aufweist, wie insbesondere Fig. 2d zu erkennen gibt. Der Bördel 40 entspricht der Form F gemäß der Norm DIN 74 234:1992-09, weshalb die Dichtfläche 41 konvex ausgestaltet ist. Im eingebauten Zustand liegt die konvexe Dichtfläche 41 an der konkaven Anschlussfläche 54 fluiddicht an, wie Fig. 1a zu erkennen gibt. Die Kontaktfläche 62 der Rohrschraube 60 liegt an der Anlagefläche 42 an. Die Rohrleitung 10 wird mittels des Bördels 40 somit zwischen der Kontaktfläche 62 und der Anschlussfläche 54 gehalten.

Die in Fig. 1b dargestellte Ausführungsform umfasst eine Rohrleitung 10, die mittels einer Rohrschraube 60 an einem Anschlusselement 50 befestigt ist. Im Unterschied zu der Ausführungsform gemäß Fig. 1a entspricht der Bördel 40 allerdings nicht der Form F, sondern der Form E gemäß der Norm DIN 74 234:1992-09. Die Dichtfläche 41 ist deshalb konkav ausgestaltet und liegt an der in diesem Fall konvex ausgestalteten Anschlussfläche 54 des Anschlusselements 50 fluiddicht an. Weiter ist zu erkennen, dass die Kontaktfläche 62 der Rohrschraube 60 an der Anlagefläche 42 des Bördels 40 anliegt. Die Rohrleitung 10 wird somit wie bei der Ausführungsform gemäß Fig. 1a mittels des Bördels 40 zwischen der Kontaktfläche 62 und der Anschlussfläche 54 gehalten.

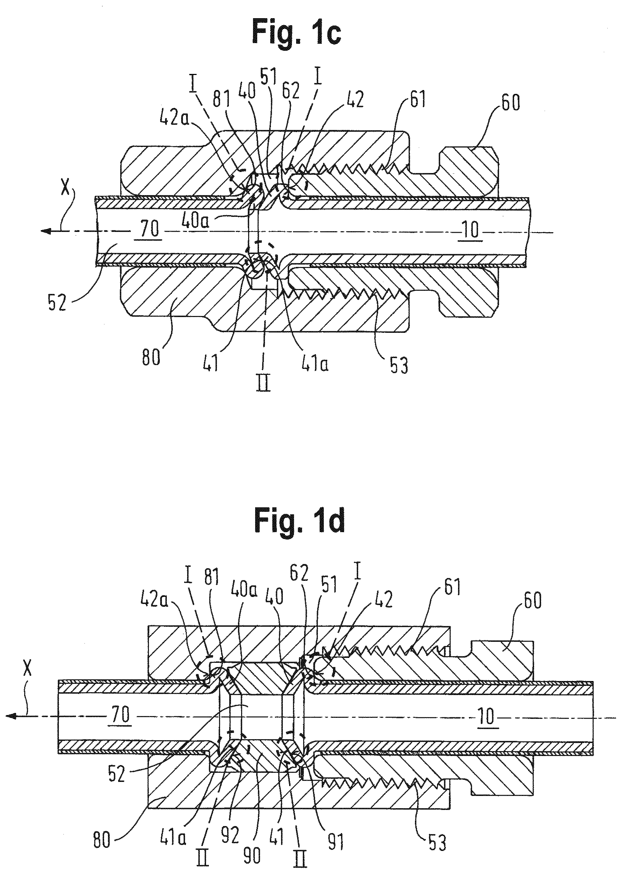

Die in Fig. 1c dargestellte Ausführungsform betrifft eine sogenannte E-F-Verbindung, bei der die Rohrleitung 10 mittels einer Rohrmutter 80, die eine Kontaktfläche 81 umfasst, mit einer weiteren Rohrleitung 70 verbunden ist. Die Rohrleitung 70 weist einen Bördel 40a der Form E auf, wohingegen die Rohrleitung 10 einen Bördel 40 der Form F aufweist. Die Dichtfläche 41 des Bördels 40 der Rohrleitung 10 ist konvex ausgestaltet und liegt an der konkav ausgebildeten, eine Anschlussfläche bildenden Dichtfläche 41a des Bördels 40a der Rohrleitung 70 fluiddicht an. Die Kontaktfläche 62 der Rohrschraube 60 liegt an der Anlagefläche 42 des Bördels 40 an, wohingegen die Kontaktfläche 81 der Rohrmutter 80 an der Anlagefläche 42a des Bördels 40a anliegt. Die Rohrleitung 10 und die Rohrleitung 70 werden somit mittels der Bördel 40, 40a zwischen der Kontaktfläche 62 und der Kontaktfläche 81 gehalten.

Eine sogenannte F-F-Verbindung, die in Fig. 1d dargestellt ist, umfasst eine Rohrleitung 10, die mittels einer Rohrmutter 80 mit einer weiteren Rohrleitung 70 verbunden ist. Im Unterschied zu der Ausführungsform gemäß Fig. 1c weisen sowohl die Rohrleitung 10 als auch die Rohrleitung 70 jeweils einen Bördel 40, 40a der Form F auf. Um ein fluiddichtes Verbinden der Rohrleitung 10 mit der Rohrleitung 70 zu ermöglichen, befindet sich zwischen der Rohrleitung 10 und der Rohrleitung 70 ein Zwischenelement 90, das konkav ausgestaltete Anschlussflächen 91, 92 aufweist. Die konvex ausgebildete Dichtfläche 41 des Bördels 40 liegt an der konkav ausgebildeten Anschlussfläche 91 des Zwischenelements 90 fluiddicht an. Ebenso liegt die konvex ausgebildete Dichtfläche 41a des Bördels 40a an der konkav ausgebildeten Anschlussfläche 92 des Zwischenelements 90 fluiddicht an. Wie bei der Ausführungsform gemäß Fig. 1c liegen die Kontaktfläche 62 der Rohrschraube 60 an der Anlagefläche 42 des Bördels 40 und die Kontaktfläche 81 der Rohrmutter 80 an der Kontaktfläche 42a des Bördels 40a an. Die Rohrleitung 10 und die Rohrleitung 70 werden somit mittels der Bördel 40, 40a und dem Zwischenelement 90 zwischen der Kontaktfläche 62 und der Kontaktfläche 81 gehalten.

Um sicherzustellen, dass beim Einschrauben der Rohrschraube 60 keine Torsion der Rohrleitung 10, 70 und gegebenenfalls in dem Zwischenelement 90 auftritt, die zu einer unerwünschten Torsionsspannung in der Rohrleitung 10, 70 und gegebenenfalls dem Zwischenelement 90 führte, ist es erstrebenswert, dass in dem Kontaktbereich zwischen der Kontaktfläche 62 und der Anlagefläche 42, sowie gegebenenfalls dem Kontaktbereich zwischen der Kontaktfläche 81 und der Anlagefläche 42a, der in den Fig. 1a bis 1d mit I gekennzeichnet ist, eine vergleichsweise geringe Reibung auftritt. In dem Kontaktbereich zwischen der Dichtfläche 41, 41a und der Anschlussfläche 54, 91, 92, der in den Fig. 1a bis 1d mit II gekennzeichnet ist, ist es hingegen vorteilhaft, wenn eine vergleichsweise große Reibung auftritt, um insbesondere auch ein fluiddichtes Anliegen der Rohrleitung 10 an dem Anschlusselement 50, dem Zwischenelement 90 oder der weiteren Rohrleitung 70 zu gewährleisten. Um diesen unterschiedlichen Anforderungen zu genügen, ist die Oberfläche der Dichtfläche 41, 41a so beschaffen, dass sich ein erster Reibwert µ₁ ergibt. Die Oberfläche der Anlagefläche 42, 42a ist hingegen so beschaffen, dass sich ein zweiter Reibwert µ₂ ergibt, der kleiner ist als der erste Reibwert µ₁.

Die Herstellung einer solchen Rohrleitung 10, 70 ist in den Fig. 2a bis 2e dargestellt. Fig. 2a zeigt die bereitgestellt Rohrleitung 10, die das sich in axialer Richtung x erstreckende Innenrohr 20, die auf das Innenrohr 20 aufgetragene Korrosionsschutzschicht 21 und die auf der Korrosionsschutzschicht 21 befindliche Beschichtung 30, die das Innenrohr 20 ummantelt, umfasst.

Nach dem Bereitstellen der Rohrleitung 10, 70 wird in an sich bekannter Weise mittels einer Laserbearbeitung oder einer mechanischen Bearbeitung, beispielsweise durch ein Schälwerkzeug, oder mittels einer Kombination aus beiden die Beschichtung 30 in dem Endabschnitt 12 entfernt. Wie Fig. 2b zu erkennen gibt, wird der Endabschnitt 12, entlang eines ersten Entschichtungsabschnitts 13 derart entschichtet, dass die Oberfläche des Endabschnitts 12 im Bereich des ersten Entschichtungsabschnitts 13 den ersten Reibwert µ₁ hervorruft. Der erste Entschichtungsabschnitt 13 erstreckt sich in axialer Richtung x von einem ersten Anfangspunkt 14 der sich an der Stirnfläche 11 befindet, zu einem ersten Endpunkt 15. Der Endabschnitt 12 wird ferner entlang eines zweiten Entschichtungsabschnitts 16 derart entschichtet, dass die Oberfläche des Endabschnitts 12 im Bereich des zweiten Entschichtungsabschnitts 16 den zweiten Reibwert µ₂, der geringer als der erste Reibwert µ₁ ist, hervorruft. Der zweite Entschichtungsabschnitt 16 erstreckt sich in axialer Richtung x von einem zweiten Anfangspunkt 17, der im vorliegenden Fall mit dem ersten Endpunkt 15 zusammenfällt, bis zu einem zweiten Endpunkt 18, der das Ende des Endabschnitts 12 bildet. Um die unterschiedlichen Reibwerte µ₁ und µ₂ hervorzurufen, wird die Beschichtung 30 im Bereich des ersten Entschichtungsabschnitts 13 auf eine erste Schichtdicke Δ₁ und im Bereich des zweiten Entschichtungsabschnitts 16 auf eine zweite Schichtdicke Δ₂, die größer als die erste Schichtdicke Δ₁ ist, reduziert, wie Fig. 3 zu erkennen gibt. Die erste Schichtdicke Δ₁ beträgt vorzugsweise Null, das heißt die Beschichtung 30 wird im Bereich des ersten Entschichtungsabschnitts 13 vollständig entfernt.

Nach diesem selektiven Abtragen der Beschichtung 30 im Bereich des Endabschnitts 12 kann die Außenkante der Stirnfläche 11 bei Bedarf mit einer Fase 19 versehen werden, wie Fig. 2c zu erkennen gibt. Anschließend wird der Endabschnitt 12 zum Bilden des Bördels 40 umgeformt, beispielsweise mit Hilfe von einem üblichen Bördelwerkzeug. Der in Fig. 2d gezeigte Bördel 40 entspricht der Form F gemäß der Norm DIN 74 234:1992-09, kann jedoch auch die Form E erhalten, wie in Fig. 2e gezeigt ist. Maßgeblich ist lediglich, dass der Endabschnitt 12 derart umgeformt wird, dass der erste Entschichtungsabschnitt 13 die Dichtfläche 41 und der zweite Entschichtungsabschnitt 16 die Anlagefläche 42 des Bördels bildet.

Das zuvor beschriebene Verfahren zum Herstellen einer mit dem Bördel 40, 40a versehenen Rohrleitung 10, 70 ermöglicht es, der Dichtfläche 41, 41a und der Anlagefläche 42, 42a eine der jeweiligen Anforderung entsprechende Beschaffenheit zu verleihen. Der vergleichsweise geringe Reibwert µ₂, der sich im Bereich der Anlagefläche 42, 42a durch das Abtragen der Beschichtung 30 auf die zweite Schichtdicke Δ₂ ergibt, wirkt einer Torsion der Rohrleitung 10 beim Einschrauben der Rohrschraube 60 entgegen. Das vollständige Entfernen der Beschichtung 30 im Bereich des ersten Entschichtungsabschnitts 13 verleiht der Dichtfläche 41, 41a nicht nur die für ein fluiddichtes Anliegen an der Anschlussfläche 54, 91, 92 erforderliche Ebenheit, sondern ruft zudem einen vergleichsweise großen Reibwert µ₁ hervor, der ebenfalls einer Torsion der Rohrleitung 10 beim Einschrauben der Rohrschraube 60 entgegenwirkt. Die durch das selektive Abtragen der Beschichtung 30 im Bereich des Endabschnitts 12 hergestellten Rohrleitung 10 zeichnet sich damit nicht zuletzt durch eine Montage aus, die das Auftreten von Torsionsspannungen in der Rohrleitung 10 vermeidet und damit einem unbeabsichtigten Loslösen der Rohrschraube 60 in eingebautem Zustand entgegenwirkt.

### Bezugszeichenliste

- 10: Rohrleitung
- 11: Stirnfläche
- 12: Endabschnitt
- 13: erster Entschichtungsabschnitt
- 14: erster Anfangspunkt
- 15: erster Endpunkt
- 16: zweiter Entschichtungsabschnitt
- 17: zweiter Anfangspunkt
- 18: zweiter Endpunkt
- 19: Fase

- 20: Innenrohr
- 21: Korrosionsschutzschicht

- 30: Beschichtung

- 40: Bördel
- 41: Dichtfläche
- 41a: Dichtfläche
- 42: Anlagefläche
- 42a: Anlagefläche
- 50: Anschlusselement
- 51: Öffnung
- 52: Leitung
- 53: Innengewinde
- 54: Anschlussfläche

- 60: Rohrschraube
- 61: Außengewinde
- 62: Kontaktfläche

- 70: Rohrleitung

- 80: Rohrmutter
- 81: Kontaktfläche
- 90: Zwischenelement
- 91: Anschlussfläche
- 92: Anschlussfläche

- I: Kontaktbereich mit vergleichsweise geringer Reibung
- II: Kontaktbereich mit vergleichsweise großer Reibung
- x: axiale Richtung
- Δ_{B}: Gesamtschichtdicke
- Δ₁: erste Schichtdicke
- Δ₂: zweite Schichtdicke
- µ₁: erster Reibwert
- µ₂: zweiter Reibwert

## Patentansprüche

1. Verfahren zum Herstellen einer mit einem Bördel (40, 40a) versehenen Rohrleitung (10, 70), insbesondere einer Bremsrohrleitung oder Kraftstoffrohrleitung für ein Kraftfahrzeug, umfassend die folgenden Verfahrensschritte:
Bereitstellen einer Rohrleitung (10, 70), die ein sich in einer axialen Richtung (x) erstreckendes Innenrohr (20), eine das Innenrohr (20) ummantelnde Beschichtung (30) und einen an einer Stirnfläche (11) der Rohrleitung (10, 70) endenden Endabschnitt (12) umfasst;
Entschichten des Endabschnitts (12) entlang eines ersten Entschichtungsabschnitts (13) auf eine erste Schichtdicke (Δ₁) derart, dass die Oberfläche des Endabschnitts (12) im Bereich des ersten Entschichtungsabschnitts (13) einen ersten Reibwert (µ₁) hervorruft;
Entschichten des Endabschnitts (12) entlang wenigstens eines zweiten Entschichtungsabschnitts (16) auf eine konstante zweite Schichtdicke (Δ₂), die größer als die erste Schichtdicke (Δ₁) ist, derart, dass die Oberfläche des Endabschnitts (12) im Bereich des zweiten Entschichtungsabschnitts (16) einen zweiten Reibwert (µ₂), der geringer als der erste Reibwert (µ₁) ist, hervorruft;
Umformen des Endabschnitts (12) zum Bilden eines Bördels (40, 40a), der eine stirnseitige Dichtfläche (41, 41a) und eine der Dichtfläche (41,41a) abwandte Anlagefläche (42, 42a) aufweist, derart, dass der erste Entschichtungsabschnitt (13) die Dichtfläche (41, 41a) und der zweite Entschichtungsabschnitt (16) die Anlagefläche (42, 42a) bildet, wobei der Übergang von dem ersten Entschichtungsabschnitt (13) auf den zweiten Entschichtungsabschnitt (16) sich im Bereich des größten Außendurchmessers des Bördels (40, 40a) befindet.

2. Verfahren nach Anspruch 1, **dadurch gekennzeichnet, dass** sich der erste Entschichtungsabschnitt (13) in der axialen Richtung (x) von einem ersten Anfangspunkt (14) bis zu einem ersten Endpunkt (15) erstreckt und dass sich der zweite Entschichtungsabschnitt (16) in der axialen Richtung (x) von einem zweiten Anfangspunkt (17) bis zu einem zweiten Endpunkt (18) erstreckt, wobei vorzugsweise der erste Anfangspunkt (14) sich an der Stirnfläche (11) befindet, und wobei ferner vorzugsweise der erste Endpunkt (15) und der zweite Anfangspunkt (17) zusammenfallen.

3. Verfahren nach Anspruch 1 oder 2, **dadurch gekennzeichnet, dass** der Endabschnitt (12) an der Stirnfläche (11) vor dem Umformen optional mit einer Fase (19) versehen wird.

4. Verfahren nach einem der Ansprüche 1 bis 3, **dadurch gekennzeichnet, dass** das Innenrohr (20) aus Metall, insbesondere Stahl oder einer Kupfer-Nickel-Legierung, besteht, wobei vorzugsweise auf das Innenrohr (20) eine Korrosionsschutzschicht (21), insbesondere auf Basis von Zink oder Aluminium, aufgetragen ist.

5. Verfahren nach einem der Ansprüche 1 bis 4, **dadurch gekennzeichnet, dass** die Beschichtung (30) aus Kunststoff, insbesondere Polyamid, besteht, wobei vorzugsweise die Beschichtung (30) eine Gesamtschichtdicke (Δ_{B}) hat, die zwischen ca. 0,05 mm und ca. 0,4 mm, insbesondere zwischen ca. 0,1 mm und ca. 0,3 mm, beträgt.

6. Verfahren nach einem der Ansprüche 1 bis 5, **dadurch gekennzeichnet, dass** zum Entschichten des Endabschnitts (12) die Beschichtung (30) mittels eines Laserstrahls selektiv abgetragen wird.

7. Verfahren nach einem der Ansprüche 1 bis 6, **dadurch gekennzeichnet, dass** die Beschichtung (30) im Bereich des ersten Entschichtungsabschnitts (13) vollständig entfernt wird.

8. Rohrleitung, insbesondere Bremsrohrleitung oder Kraftstoffrohrleitung für ein Kraftfahrzeug, umfassend:
ein sich in einer axialen Richtung (x) erstreckendes Innenrohr (20);
eine das Innenrohr (20) ummantelnde Beschichtung (30) und einen an einer Stirnfläche (11) der Rohrleitung endenden Endabschnitt (12);
wobei der Endabschnitt (12) einen Bördel (40, 40a) umfasst, der eine stirnseitige Dichtfläche (41, 41a) und eine der Dichtfläche (41, 41a) abwandte Anlagefläche (42, 42a) aufweist;
wobei die Beschichtung (30) im Bereich des Endabschnitts (12) selektiv derart abgetragen ist, dass die Oberfläche des Endabschnitts (12) an der Dichtfläche (41, 41a), die von einem ersten Entschichtungsabschnitt (13) des Endabschnitts (12) gebildet ist, einen ersten Reibwert (µ₁) und an der Anlagefläche (42, 42a), die von einem zweiten Entschichtungsabschnitt (16) des Endabschnitts (12) gebildet ist, einen zweiten Reibwert (µ₂), der geringer als der erste Reibwert (µ₁) ist, hervorruft;
wobei die Beschichtung (30) im Bereich des ersten Entschichtungsabschnitts (13) auf eine erste Schichtdicke (Δ₁) und im Bereich des zweiten Entschichtungsabschnitts (16) auf eine konstante zweite Schichtdicke (Δ₂), die größer als die erste Schichtdicke (Δ₁) ist, reduziert ist und
wobei der Übergang von dem ersten Entschichtungsabschnitt (13) auf den zweiten Entschichtungsabschnitt (16) sich im Bereich des größten Außendurchmessers des Bördels (40, 40a) befindet.

9. Rohrleitung nach Anspruch 8, **dadurch gekennzeichnet, dass** das Innenrohr (20) aus Metall, insbesondere Stahl oder einer Kupfer-Nickel-Legierung, besteht, wobei vorzugsweise auf das Innenrohr (20) eine Korrosionsschutzschicht (21), insbesondere auf Basis von Zink oder Aluminium, aufgetragen ist.

10. Rohrleitung nach Anspruch 8 oder 9, **dadurch gekennzeichnet, dass** die Beschichtung (30) aus Kunststoff, insbesondere Polyamid, besteht, wobei vorzugsweise die Beschichtung (30) eine Gesamtschichtdicke (Δ_{B}) hat, die zwischen ca. 0,05 mm und ca. 0,4 mm, insbesondere zwischen ca. 0,1 mm und ca. 0,3 mm, beträgt.

11. Rohrleitung nach einem der Ansprüche 8 bis 10, **dadurch gekennzeichnet, dass** die Beschichtung (30) im Bereich des ersten Entschichtungsabschnitts (13) vollständig entfernt ist.

## Claims

1. Method for producing a pipeline (10, 70) provided with a flange (40, 40a), in particular a brake pipeline or fuel pipeline for a motor vehicle, comprising the following method steps:
providing a pipeline (10, 70) comprising an inner pipe (20) extending in an axial direction (x), a coating (30) covering the inner pipe (20) and an end segment (12) terminating at an end face (11) of the pipeline (10, 70);
performing a decoating on the end segment (12) along a first decoating segment (13) to a first layer thickness (Δ₁) such that the surface of the end segment (12) produces a first coefficient of friction (µ₁) in the region of the first decoating segment (13);
performing a decoating on the end segment (12) along at least a second decoating segment (16) to a constant second layer thickness (Δ₂) which is greater than the first layer thickness (Δ₁), such that the surface of the end segment (12) produces a second coefficient of friction (µ₂) in the region of the second decoating segment (16) which is smaller than first coefficient of friction (µ₁);
forming the end segment (12) to form a flange (40, 40a) having a face sealing surface (41, 41a) and a contact surface (42, 42a) facing away from the sealing surface (41, 41a), such that the first decoating segment (13) forms the sealing surface (41, 41a) and the second decoating segment (16) forms the contact surface (42, 42a), the transition from the first decoating segment (13) to the second decoating segment (16) being located in the region of the greatest outer diameter of the flange (40, 40a).

2. Method according to claim 1, **characterised in that** the first decoating segment (13) extends in the axial direction (x) from a first starting point (14) to a first end point (15) and **in that** the second decoating segment (16) extends in the axial direction (x) from a second starting point (17) to a second end point (18), preferably the first starting point (14) being located at the end face (11), and wherein further preferably the first end point (15) and the second starting point (17) coincide.

3. Method according to claim 1 or 2, **characterised in that** the end segment (12) is optionally provided with a chamfer (19) at the end face (11) before forming.

4. Method according to any one of claims 1 to 3, **characterised in that** the inner pipe (20) consists of metal, in particular of steel or a copper-nickel alloy, preferably a corrosion protection layer (21), in particular based on zinc or aluminium, being applied to the inner pipe (20).

5. Method according to any one of claims 1 to 4, **characterised in that** the coating (30) consists of plastic, in particular polyamide, the coating (30) preferably having a total layer thickness (Δ_{B}) which is between approximately 0.05 mm and approximately 0.4 mm, in particular between approximately 0.1 mm and approximately 0.3 mm.

6. Method according to any one of claims 1 to 5, **characterised in that** for a decoating at the end segment (12), the coating (30) is selectively removed by means of a laser beam.

7. Method according to any one of claims 1 to 6, **characterised in that** the coating (30) is completely removed in the region of the first decoating segment (13).

8. Pipeline, in particular a brake pipeline or fuel pipeline for a motor vehicle, comprising:
an inner pipe (20) extending in an axial direction (x);
a coating (30) covering the inner pipe (20) and
an end segment (12) terminating at an end face (11) of the pipeline;
wherein the end segment (12) comprises a flange (40, 40a) having a face sealing surface (41, 41a) and a contact surface (42, 42a) facing away from the sealing surface (41, 41a);
wherein the coating (30) in the region of the end segment (12) has been selectively removed such that the surface of the end segment (12) produces a first coefficient of friction (µ₁) at the sealing surface (41, 41a), which is formed by a first decoating segment (13) of the end segment (12), and produces a second coefficient of friction (µ₂) at the contact surface (42, 42a), which is formed by a second decoating segment (16) of the end segment (12), the second coefficient of friction (µ₂) being smaller than the first coefficient of friction (µ₁);
wherein in the region of the first decoating segment (13) the coating (30) has been reduced to a first layer thickness (Δ₁) and in the region of the second decoating segment (16) to a constant second layer thickness (Δ₂) which is greater than the first layer thickness (Δ₁), and
wherein the transition from the first decoating segment (13) to the second decoating segment (16) is located in the region of the greatest outer diameter of the flange (40, 40a).

9. Pipeline according to claim 8, **characterised in that** the inner pipe (20) consists of metal, in particular of steel or a copper-nickel alloy, preferably a corrosion protection layer (21), in particular based on zinc or aluminium, having been applied to the inner pipe (20).

10. Pipeline according to claim 8 or 9, **characterised in that** the coating (30) consists of plastic, in particular polyamide, the coating (30) preferably having a total layer thickness (Δ_{B}) which is between approximately 0.05 mm and approximately 0.4 mm, in particular between approximately 0.1 mm and approximately 0.3 mm.

11. Pipeline according to any one of claims 8 to 10, **characterised in that** the coating (30) has been completely removed in the region of the first decoating segment (13).

## Revendications

1. Procédé de fabrication d'un conduit tubulaire (10, 70) pourvu d'un collet (40, 40a), en particulier d'un conduit tubulaire de frein ou d'un conduit tubulaire de carburant pour un véhicule automobile, comprenant les étapes de procédé suivantes consistant à :
- fournir un conduit tubulaire (10, 70) qui comprend un conduit intérieur (20) s'étendant dans une direction axiale (x), un revêtement (30) enveloppant le conduit intérieur (20), et une portion d'extrémité (12) qui se termine à une surface frontale (11) du conduit tubulaire (10, 70) ;
décaper la portion d'extrémité (12) le long d'une première portion de décapage (13) pour la ramener à une première épaisseur de couche (Δ₁) de telle sorte que la surface de la portion d'extrémité (12) provoque un premier coefficient de friction (µ₁) dans la zone de la première portion de décapage (13) ;
décaper la portion d'extrémité (12) le long d'au moins une seconde portion de décapage (16) pour la ramener à une seconde épaisseur de couche constante (□_{□}) supérieure à la première épaisseur de couche (Δ₁) de telle sorte que la surface de la portion d'extrémité (12) provoque un second coefficient de friction (µ₂) inférieur au premier coefficient de friction (µ₁) dans la zone de la seconde portion de décapage (16) ;
mettre en forme la portion d'extrémité (12) pour former un collet (40, 40a) qui présente une surface d'étanchéité frontale (41, 41a) et une surface d'appui (42, 42a) détournée de la surface d'étanchéité (41, 41a), de telle sorte que la première portion de décapage (13) forme la surface d'étanchéité (41, 41a) et que la seconde portion de décapage (16) forme la surface d'appui (42, 42a), la transition de la première portion de décapage (13) vers la seconde portion de décapage (16) se situant dans la zone du plus grand diamètre extérieur du collet (40, 40a).

2. Procédé selon la revendication 1, **caractérisé en ce que** la première portion de décapage (13) s'étend dans la direction axiale (x) depuis un premier point initial (14) jusqu'à un premier point final (15) et que la seconde portion de décapage (16) s'étend dans la direction axiale (x) depuis un second point initial (17) jusqu'à un second point final (18), et de préférence le premier point initial (14) se situe sur la surface frontale (11) et de préférence le premier point final (15) coïncide en outre avec le second point initial (17).

3. Procédé selon la revendication 1 ou 2, **caractérisé en ce que** la portion d'extrémité (12) est en option pourvue d'un chanfrein (19) sur la surface frontale (11), avant la mise en forme.

4. Procédé selon l'une des revendications 1 à 3, **caractérisé en ce que** le conduit intérieur (20) est constitué en métal, en particulier en acier ou en un alliage de cuivre-nickel, et de préférence une couche de protection anticorrosion (21), en particulier à base de zinc ou d'aluminium, est déposée sur le conduit intérieur (20).

5. Procédé selon l'une des revendications 1 à 4, **caractérisé en ce que** le revêtement (30) est constitué en matière plastique, en particulier en polyamide, et de préférence le revêtement (30) présente une épaisseur de couche totale (Δ_{B}) qui est comprise entre environ 0,05 mm et environ 0,4 mm, en particulier entre environ 0,1 mm et environ 0,3 mm.

6. Procédé selon l'une des revendications 1 à 5, **caractérisé en ce que** pour décaper la portion d'extrémité (12), le revêtement (30) est enlevé sélectivement au moyen d'un rayon laser.

7. Procédé selon l'une des revendications 1 à 6, **caractérisé en ce que** le revêtement (30) est enlevé complètement dans la zone de la première portion de décapage (13).

8. Conduit tubulaire, en particulier conduit tubulaire de frein ou conduit tubulaire de carburant pour un véhicule automobile, comportant :
un conduit intérieur (20) s'étendant dans une direction axiale (x),
un revêtement (30) enveloppant le conduit intérieur (20), et une portion d'extrémité (12) qui se termine à une surface frontale (11) du conduit tubulaire ;
la portion d'extrémité (12) comprenant un collet (40, 40a) qui présente une surface d'étanchéité frontale (41, 41a) et une surface d'appui (42, 42a) détournée de la surface d'étanchéité (41, 41a) ;
dans lequel
le revêtement (30) est enlevé sélectivement dans la zone de la portion d'extrémité (12) de telle sorte que la surface de la portion d'extrémité (12) provoque un premier coefficient de friction (µ₁) sur la surface d'étanchéité (41, 41a) qui est formée par une première portion de décapage (13) de la portion d'extrémité (12), et un second coefficient de friction (µ₂) inférieur au premier coefficient de friction (µ₁) sur la surface d'appui (42, 42a) formée par une seconde portion de décapage (16) de la portion d'extrémité (12) ;
dans la zone de la première portion de décapage (13), le revêtement (30) est réduit à une première épaisseur de couche (Δ₁), et dans la zone de la seconde portion de décapage (16), il est réduit à une seconde épaisseur de couche constante (Δ₂) qui est supérieure à la première épaisseur de couche (Δ₁), et
la transition de la première portion de décapage (13) vers la seconde portion de décapage (16) se situe dans la zone du plus grand diamètre extérieur du collet (40, 40a).

9. Conduit tubulaire selon la revendication 8, **caractérisé en ce que** le conduit intérieur (20) est constitué en métal, en particulier en acier ou en un alliage de cuivre-nickel, et de préférence une couche de protection anticorrosion (21), en particulier à base de zinc ou d'aluminium, est déposée sur le conduit intérieur (20).

10. Conduit tubulaire selon la revendication 8 ou 9, **caractérisé en ce que** le revêtement (30) est constitué en matière plastique, en particulier en polyamide, et de préférence le revêtement (30) présente une épaisseur de couche totale (Δ_{B}) qui est comprise entre environ 0,05 mm et environ 0,4 mm, en particulier entre environ 0,1 mm et environ 0,3 mm.

11. Conduit tubulaire selon l'une des revendications 8 à 10, **caractérisé en ce que** le revêtement (30) est enlevé complètement dans la zone de la première portion de décapage (13).
